# EUROPEAN PATENT APPLICATION

(11) **EP 4 198 944 A1**
(43) Date of publication of application: **21.06.2023**
(21) Application number: 22213481.9
(22) Date of filing: 14.12.2022
(51) Int. Cl.: G08G 1/16, G08G 1/01, G08G 1/04, G08G 1/08, G08G 1/0965

(54) **ROADSIDE SENSING SYSTEM AND TRAFFIC CONTROL METHOD**

(30) Priority: 15.12.2021 CN 202111539341
(71) Applicant: Apollo Intelligent Connectivity (Beijing) Technology Co., Ltd., Beijing 100176 (CN)
(72) Inventor: WANG, Kun, Beijing, 100176 (CN)
(74) Representative: V.O.

(57) **Abstract**

The present disclosure provides a roadside sensing system and a traffic control method, relates to the technical field of artificial intelligence such as deep learning and intelligent transportation. An embodiment of the system includes: a basic supply facility, a roadside computing facility and a roadside sensing facility set on a target road section; the basic supply facility is connected to the roadside computing facility and the roadside sensing facility, and the basic supply facility is configured to provide basic supply to the roadside computing facility and the roadside sensing facility; the roadside sensing facility is configured to acquire roadside sensing information; and the roadside computing facility is configured to store and process the roadside sensing information to obtain sensing result information.

## Description

### TECHNICAL FIELD

The present disclosure relates to the field of computers, in particular to deep learning and intelligent transportation, and more particular to a roadside sensing system and a traffic control method.

### BACKGROUND

With the development of new generation technologies such as mobile Internet, autonomous driving, and big data, facing a complex traffic environment, a roadside sensing system should meet the following requirements: (1) sensing and identifying requirements; (2) computing requirements; and (3) communication requirements.

Currently, the requirements for the roadside sensing system are met through the following equipment: (1) traffic monitoring terminals, which are configured to collect target vehicle data such as target vehicle locations, license plates, or vehicle speeds, and transmit the data to the background via wired or wireless (Uu cellular communication) method to perform traffic monitoring for traffic violations, for example, cameras, speed radars, etc.; (2) traffic guidance terminals, perform traffic guidance on target vehicles through information such as road guidance, road dredging, for example, road signs, road plates, or road information boards; and (3) weather monitoring terminals, collect road weather disaster information and transmit it to the background via wired or wireless (Uu cellular communication) method for weather monitoring, for example, weather monitoring stations.

### SUMMARY

Embodiments of the present disclosure provide a roadside sensing system and a traffic control method.

In a first aspect, an embodiment of the present disclosure provide a roadside sensing system, including: a basic supply facility, a roadside computing facility and a roadside sensing facility set on a target road section. The basic supply facility is connected to the roadside computing facility and the roadside sensing facility, and the basic supply facility is configured to provide basic supply to the roadside computing facility and the roadside sensing facility; the roadside sensing facility is configured to acquire roadside sensing information; and the roadside computing facility is configured to store and process the roadside sensing information to obtain sensing result information.

In a second aspect, an embodiment of the present disclosure provide a traffic control method, including: acquiring roadside sensing information; and processing the roadside sensing information to obtain sensing result information.

In a third aspect, an embodiment of the present disclosure provide traffic control system, including: an onboard subsystem, a traveler subsystem, a central subsystem and a roadside subsystem; wherein the central subsystem comprises a cloud control platform, and the roadside subsystem comprises a communication facility, a traffic safety and management facility and the aforementioned roadside sensing system. The communication facility is configured to acquire roadside sensing information; the roadside sensing facility is configured to acquire the roadside sensing information; the roadside computing facility is configured to store and process the roadside sensing information to obtain sensing result information; and send the roadside sensing information to the cloud control platform; and the cloud control platform is configured to receive the roadside sensing information, and transmit the roadside sensing information to the onboard subsystem, the traveler subsystem and the traffic safety and management facility.

In the roadside sensing system and the traffic control method provided by the embodiments of the present disclosure, the roadside sensing facility acquires the roadside sensing information; then the roadside computing facility stores and processes the roadside sensing information to obtain the roadside result information, so that the behavior of traffic participants on the target road can be controlled through the roadside result information, thereby strengthening the control of traffic behavior.

It should be understood that contents described in this section are neither intended to identify key or important features of embodiments of the present disclosure, nor intended to limit the scope of the present disclosure. Other features of the present disclosure will become readily understood in conjunction with the following description.

### BRIEF DESCRIPTION OF THE DRAWINGS

Other features, objectives and advantages of the present disclosure will become more apparent upon reading the detailed description of non-limiting embodiments with reference to the following accompanying drawings. The accompanying drawings are used for better understanding of the present solution and do not constitute a limitation to the present disclosure.
Fig. 1 is an exemplary system architecture diagram to which an embodiment of the present disclosure may be applied;
Fig. 2 is an exemplary system architecture diagram to which an embodiment of the present disclosure may be applied;
Fig. 3 is a flowchart of a traffic control method based on a roadside sensing system according to an embodiment of the present disclosure;
Fig. 4 is a flowchart of a traffic control method based on a roadside sensing system according to an embodiment of the present disclosure;
Fig. 5 is a flowchart of a traffic control method based on a roadside sensing system according to an embodiment of the present disclosure; and
Fig. 6 is a schematic diagram of a traffic control system according to the an embodiment of present disclosure.

### DETAILED DESCRIPTION OF EMBODIMENTS

Example embodiments of the present disclosure are described below with reference to the accompanying drawings, where various details of the embodiments of the present disclosure are included to facilitate understanding, and should be considered merely as examples. Therefore, those of ordinary skills in the art should realize that various changes and modifications can be made to the embodiments described herein without departing from the scope of the present disclosure. Similarly, for clearness and conciseness, descriptions of well-known functions and structures are omitted in the following description.

It should be noted that the embodiments in the present disclosure and the features in the embodiments may be combined with each other on a non-conflict basis. The present disclosure will be described below in detail with reference to the accompanying drawings and in combination with the embodiments.

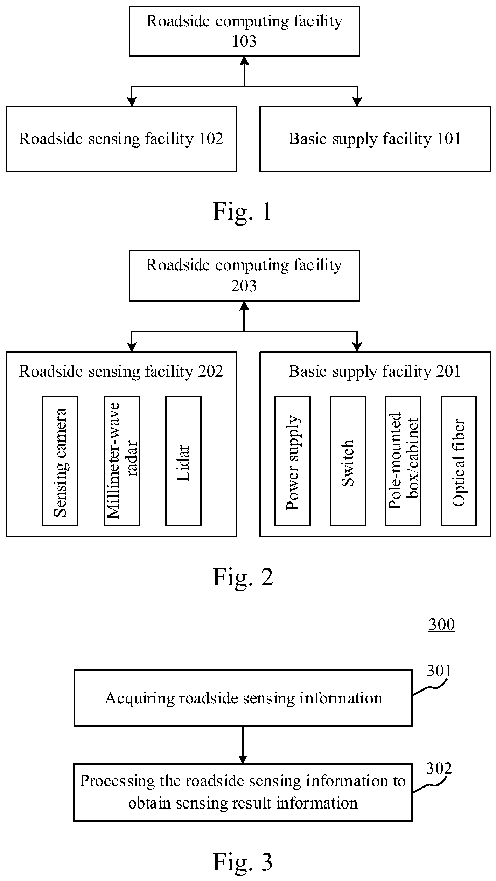

Fig. 1 shows a schematic diagram of a roadside sensing system to which an embodiment of the present disclosure may be applied. The roadside sensing system may include: a basic supply facility 101, a roadside sensing facility 102 and a roadside computing facility 103 set on a target road section.

The basic supply facility 101 is connected to the roadside computing facility 103 and the roadside sensing facility 102, respectively, and the basic supply facility 101 is configured to provide basic supply to the roadside computing facility 103 and the roadside sensing facility 102.

The roadside sensing facility 102 is configured to acquire roadside sensing information.

The roadside computing facility 103 is configured to store and process the roadside sensing information to obtain sensing result information.

In an example, the above basic supply facility 101 may be configured to support normal operation of the roadside sensing facility 102 and the roadside computing facility 103, for example, provide power for the roadside sensing facility 102 and the roadside computing facility 103.

In an example, the roadside sensing information may be information acquired by the roadside sensing facility 102, and generated by traffic participants running on the target road section, such as traffic service information, intention information, traffic environment information, location, collection time.

In an example, the roadside result information may be a result of processing the roadside sensing information, for example, traffic travelling strategy, traffic event type; event location; lane on which an event occurs; event affected area; event duration; event priority; event involved traffic participant information, and the like.

In the technical solution of the present disclosure, the collection, storage, use, processing, transmission, provision, and disclosure of the roadside sensing information involved are all in compliance with relevant laws and regulations, and do not violate public order and good customs.

In the roadside sensing system provided by an embodiment of the present disclosure, the roadside sensing facility acquires the roadside sensing information; then the roadside computing facility stores and processes the roadside sensing information to obtain the roadside result information, so that the behavior of traffic participants on the target road can be controlled through the roadside result information, thereby strengthening the control of traffic behavior.

Fig. 2 shows a schematic diagram of a roadside sensing system to which an embodiment of the present disclosure may be applied. The roadside sensing system may include: a basic supply facility 201, a roadside sensing facility 202 and a roadside computing facility 203 set on a target road section.

The basic supply facility 201 is connected to the roadside computing facility 203 and the roadside sensing facility 202, respectively, and the basic supply facility 201 is configured to provide basic supply to the roadside computing facility 203 and the roadside sensing facility 202.

The roadside sensing facility 202 is configured to acquire first traffic service information of other traffic participants, intention information of the other traffic participants, second traffic service information of a target vehicle, and traffic environment information.

The roadside computing facility 203 is configured to input the second traffic service information into a pre-trained intention recognition model to obtain intention information of the target vehicle; and generate a first traffic travelling strategy, based on the intention information of the target vehicle, the intention information of the other traffic participants and the traffic environment information, where the first traffic travelling strategy is used to control the other traffic participants to continue travelling based on the first traffic service information.

In an example, the target road section may be any road section in a road network.

In an example, the above basic supply facility 201 may be configured to support normal operation of the roadside sensing facility 202 and the roadside computing facility 203, for example, the roadside sensing facility 202 is configured to acquire the first traffic service information of the other traffic participants, the intention information of the other traffic participants, the second traffic service information of the target vehicle, and the traffic environment information. The other traffic participants may be participants other than motor vehicles among traffic participants, such as bicycles, pedestrians. The first traffic service information and the second traffic service information may be information of the other traffic participants and the target vehicle related to traffic services, respectively, such as speed, distance, traffic running mode (e.g., deceleration, reversing, etc.). The intention information of the other traffic participants may be used to represent the extent to which the other traffic participants may travel in a target traffic running mode in the future. For example, the other traffic participants have an 80% probability of going straight. The traffic environment information may be information related to an environment around the other traffic participants and the target vehicle, for example, a color displayed by traffic lights, a temperature displayed by a weather monitoring facility, and the like.

It should be noted that the target vehicle is one of the traffic participants other than the other traffic participants, and traffic participants other than motor vehicles among the traffic participants may also include: motorcycles, airplanes, electric vehicles, etc.

In the technical solution of the present disclosure, the collection, storage, use, processing, transmission, provision, and disclosure of the first traffic service information, the intention information, and the traffic environment information involved are all in compliance with relevant laws and regulations, and do not violate public order and good customs.

In an example, the roadside computing facility 203 is configured to input the second traffic service information into the pre-trained intention recognition model to obtain the intention information of the target vehicle, which may include: input the second traffic service information of the target vehicle into the pre-trained intention recognition model to obtain a behavior classification of the target vehicle, and determine the intention information of the target vehicle based on the behavior classification of the target vehicle.

Here, the intention recognition model may be determined based on the following steps: acquiring traffic behavior features of the target vehicle and corresponding behavior category labels, and the category labels may be used to represent the intention information of the target vehicle; then, using the traffic behavior features of the target vehicle and the corresponding behavior category labels for training to obtain the intention recognition model. During training, an executing body may use the traffic behavior features of the target vehicle as an input of the intention recognition model, and use the behavior category labels corresponding to the traffic behavior features of the target vehicle as an expected output to obtain the intention recognition model. The above machine learning model may be a probability model, a classification model or other classifiers in the existing technology or future development technologies. For example, the machine learning model may include any one of the following: a decision tree model (XGBoost), a logistic regression model (LR), or a deep neural network model (DNN).

It should be noted that the traffic behavior features may be used to represent traffic behavior of the target vehicle, for example, running at a speed of 30 km/h.

In the present embodiment, before input the second traffic service information of the target vehicle into a pre-trained intention recognition model to obtain intention information of the target vehicle, the roadside sensing facility 202 is further configured to: acquire data collected by sensors in an onboard subsystem, to obtain the second traffic service information of the target vehicle. The second traffic service information may be used to describe traffic-related events or states of the target vehicle, where the motor vehicles may include the target vehicle, airplanes, motorcycles, and the like.

In the present embodiment, the sensors of the onboard subsystem may include: intake pressure sensors, air flow meters, vehicle speed sensors, temperature sensors, shaft speed sensors, pressure sensors, steering devices with angle sensors, torque sensors, hydraulic sensors, vehicle speed sensors, acceleration sensors, body height sensors, roll angle sensors, angle sensors, and the like.

In an example, the roadside computing facility 203 is configured to generate a first traffic travelling strategy, based on the intention information of the target vehicle, the intention information of the other traffic participants and the traffic environment information, which may include: first generate intention priority information based on the intention information of the other traffic participants and the intention information of the target vehicle; then, generate the first traffic travelling strategy based on the intention information of the other traffic participants and the intention priority information, where the first traffic travelling strategy is used to control the other traffic participants to continue travelling based on the first traffic service information.

In this example, the roadside computing facility 203 may pre-establish a corresponding relationship between the intention information of the target vehicle, the intention information of the other traffic participants, the traffic environment information, and the first traffic travelling strategy. The intention information of the target vehicle may be used to represent the extent to which the target vehicle may travel in a target traffic running mode in the future. For example, the target vehicle has an 80% probability of slowing down.

In the technical solution of the present disclosure, the collection, storage, use, processing, transmission, provision, and disclosure of the second traffic service information involved are all in compliance with relevant laws and regulations, and do not violate public order and good customs.

In the roadside sensing system provided by an embodiment of the present disclosure, the roadside sensing facility acquires the first traffic service information of the other traffic participants, the intention information of the other traffic participants, the second traffic service information of the target vehicle, and the traffic environment information; then, the roadside computing facility generates the first traffic travelling strategy, based on the intention information of the target vehicle, the intention information of the other traffic participants and the traffic environment information, where the first traffic travelling strategy may be used to control the other traffic participants to continue travelling based on the first traffic service information. The system can formulate the corresponding first traffic travelling strategy for the other traffic participants and the target vehicle based on the intention information of the other traffic participants, the intention information of the target vehicle and the traffic environment information, so as to control the traffic behavior of the other traffic participants and the target vehicle, thereby strengthening the control of traffic behavior.

In some alternative implementations of the present embodiment, the roadside computing facility 203 is specifically configured to: determine intention priority information based on the intention information of the target vehicle and the intention information of the other traffic participants; and generate the first traffic travelling strategy based on the intention priority information and the traffic environment information.

In this implementation, the roadside computing facility 203 is specifically configured to: determine the intention priority information based on the intention information of the target vehicle and the intention information of the other traffic participants; and then, generate the first traffic travelling strategy based on the intention priority information and the traffic environment information. The intention priority information may be used to represent priority of the intention information.

In an example, the roadside sensing system may also pre-establish a corresponding relationship between the intention priority information, the traffic environment information, and a traffic travelling strategy through the roadside computing facility 203, so that the corresponding traffic travelling strategy may be determined based on the intention priority information and the traffic environment information.

Correspondingly, in this example, the roadside sensing system may pre-establish the corresponding relationship between the intention priority information, the traffic environment information, and the first traffic travelling strategy through the roadside computing facility 203, so that the first traffic travelling strategy may be generated based on the traffic environment information and the intention priority information.

In an example, according to the congestion situation of a target road, corresponding weights may be set for the intention priority information and the traffic environment information respectively, so that based on the intention priority information and the corresponding weight, and the traffic environment information and the corresponding weight, the corresponding first traffic travelling strategy may be acquired from a plurality of traffic travelling strategies.

In an example, the roadside sensing system may also preset priority corresponding to the intention information of the target vehicle and priority corresponding to the intention information of the other traffic participants through the roadside computing facility 203.

It should be noted that the priority corresponding to the intention information of the other traffic participants and the priority corresponding to the intention information of the target vehicle may be based on the principle of traffic comity, for example, yielding to pedestrians; or based on priority corresponding to an urgency level of the intention information of the other traffic participants and an urgency level of the intent information of the target vehicle. The urgency level may be used to represent the level of priority of to-be-executed traffic behavior.

Correspondingly, in this example, the roadside computing facility 203 may determine initial intention priority information in advance using the priority corresponding to the intention information of the target vehicle and the priority corresponding to the intention information of the other traffic participants; then, based on the traffic environment information, determine final intention priority information; and based on the final intention priority information, generate the first traffic travelling strategy.

In an example, signal light information included in the traffic environment information is expected to turn green in fifteen seconds, so that the other traffic participants continue travelling based on the first traffic service information.

In this implementation, the roadside computing facility may be configured to determine the intention priority information based on the intention information of the target vehicle and the intention information of the other traffic participants; and then, generate the first traffic travelling strategy based on the intention priority information and the traffic environment information, where the first traffic travelling strategy may be used to control traffic modes of the other traffic participants and the target vehicle, thereby realizing the control of the traffic behavior of the other traffic participants and the target vehicle, and strengthening the control of the traffic behavior.

In some alternative implementations of the present embodiment, the roadside computing facility 203 is specifically configured to: in response to priority corresponding to the intention information of the other traffic participants being higher than priority corresponding to the intention information of the target vehicle, determine whether the target vehicle is within a first preset area, where the first preset area is an area that allows the target vehicle to execute the first traffic travelling strategy; and in response to the target vehicle being within the first preset area, generate the first traffic travelling strategy based on the intention priority information and the traffic environment information.

In this implementation, the roadside computing facility 203 determines whether the target vehicle is within the first preset area, in response to that the priority corresponding to the intention information of the other traffic participants is higher than the priority corresponding to the intention information of the target vehicle, the first preset area being the area that allows the target vehicle to execute the first traffic travelling strategy; and generates the first traffic travelling strategy based on the intention priority information and the traffic environment information, in response to that the target vehicle is within the first preset area.

In this implementation, the roadside computing facility 203 may determine whether the target vehicle can adjust its second traffic service information to preset traffic service information through the first preset area, so that the other traffic participants continue travelling based on the first traffic service information.

In an example, the preset traffic service information may be traffic service information corresponding to a speed of the target vehicle being 0.

In some alternative implementations of the present embodiment, the roadside computing facility 203 is further configured to: in response to the target vehicle not being within the first preset area, generate a second traffic travelling strategy, where the second traffic travelling strategy is used to control the target vehicle to continue travelling based on the second traffic service information.

In this implementation, if the target vehicle is not located within the first preset area, the roadside computing facility 203 may further generate the second traffic travelling strategy, and the second traffic travelling strategy may be used to control the target vehicle to continue travelling based on the second traffic service information.

In this implementation, the executing body may determine whether the target vehicle can continue travelling based on the second traffic service information through the first preset area.

In an example, the other traffic participants stop running.

In some alternative implementations of the present embodiment, the roadside computing facility is further configured to: in response to the target vehicle not being within the first preset area, determine a third traffic travelling strategy based on the second traffic service information and the first traffic service information, where the third traffic travelling strategy is used to control the target vehicle to travel based on the third traffic service information and to control the other traffic participants to travel based on fourth traffic service information.

In this implementation, the executing body may determine the third traffic travelling strategy based on the second traffic service information and the first traffic service information, if the target vehicle is not located within the first preset area, and the third traffic travelling strategy may be used to control the target vehicle to travel based on the third traffic service information and to control the other traffic participants to travel based on the fourth traffic service information.

It should be noted that, in order to avoid collisions between the other traffic participants and the target vehicle, in an embodiment of the present disclosure, the executing body may determine the third traffic travelling strategy through the first traffic service information of the other traffic participants and the second traffic service information of the target vehicle by using a preset algorithm model, so as to formulate the corresponding traffic service information for the other traffic participants and the target vehicle through negotiation.

In an example, based on running speeds of the target vehicle and the other traffic participants, and relative distances between the target vehicle and the other traffic participants, position points where the target vehicle and the other traffic participants may collide may be determined, and then the traffic service information of the other traffic participants and the target vehicle may be adjusted, so that the other traffic participants and the target vehicle do not collide and can be still in running states.

In this implementation, through the third traffic travelling strategy, the target vehicle may be controlled to run based on the third traffic service information and the other traffic participants may be controlled to run based on the fourth traffic service information, so as to avoid any traffic jam caused by interruption of running.

In some alternative implementations of the present embodiment, the roadside computing facility 203 is further configured to: send the first traffic travelling strategy to a cloud control platform, so that the cloud control platform sends the first traffic travelling strategy to an onboard subsystem, a traveler subsystem and a traffic safety and management facility, where the first traffic travelling strategy is used to control the other traffic participants to continue travelling based on the first traffic service information, and to control whether to adjust a working state of the traffic safety and management facility.

In this implementation, the roadside computing facility 203 may also send the first traffic travelling strategy to the cloud control platform, so that the cloud control platform sends the first traffic travelling strategy to the onboard subsystem, the traveler subsystem and the traffic safety and management facility, respectively, and the first traffic travelling strategy is used to control the other traffic participants to continue travelling based on the first traffic service information, and to control whether to adjust the working state of the traffic safety and management facility. The traveler subsystem may be configured to acquire the first traffic service information of the other traffic participants and the intention information of the other traffic participants. The onboard subsystem may be configured to acquire the second traffic service information of the target vehicle. The traffic safety and management facility may be configured to acquire traffic environment information around appearers and the target vehicle.

In addition, after the roadside computing facility 203 sends the first traffic travelling strategy to the cloud control platform, the cloud control platform may summarize the first traffic travelling strategies output by a plurality of roadside sensing systems on the target road.

In an example, after the roadside computing facility 203 sends the first traffic travelling strategy to the onboard subsystem, the traveler subsystem and the traffic safety and management facility through the cloud control platform, the roadside computing facility 203 needs to determine the nearest traffic lights to the other traffic participants, and the traffic lights are controlled to turn green in a preset time period through the first traffic travelling strategy, so that the other traffic participants may continue travelling based on the first traffic service information.

It should be noted that the preset time period may be determined according to a traffic condition on the road. For example, when the traffic in other directions on the road is more congested, the preset time period may be extended to alleviate the traffic congestion in the other directions.

In some alternative implementations of the present embodiment, the roadside sensing facility 202 is specifically configured to: acquire the first traffic service information of the other traffic participants sent by a traveler subsystem, the second traffic service information of the target vehicle sent by an onboard subsystem, and the traffic environment information sent by a traffic safety and management facility.

In this implementation, the roadside sensing facility 202 may be configured to acquire the first traffic service information of the other traffic participants sent by the traveler subsystem, the second traffic service information of the target vehicle sent by the onboard subsystem, and the traffic environment information sent by the traffic safety and management facility.

In some alternative implementations of the present embodiment, the first traffic service information includes at least one of: basic information of the other traffic participants, power information of the other traffic participants, or accessory information of the other traffic participants.

In this implementation, the first traffic service information may include the basic information of the other traffic participants, the power information of the other traffic participants, and the accessory information of the other traffic participants. The basic information of the other traffic participants may include identification information, non-motorized (e.g., bicycle) structural parameter information, non-motor vehicle maintenance information and the like of the other traffic participants. The power information of the other traffic participants may include a travelling speed, acceleration and the like of the other traffic participants. The accessory information of the other traffic participants may include type and content.

It should be noted that, in order to be able to specify the first traffic service information that is more in line with the traffic operation, the first traffic service information may further include: expansion information of the other traffic participants, and the expansion information of the other traffic participants is used to supplement additional information, for example, the identification information of the other traffic participants.

In some alternative implementations of the present embodiment, the second traffic service information includes at least one of: vehicle basic information, vehicle power information, or vehicle accessory information.

In this implementation, the second traffic service information may include the vehicle basic information, the vehicle power information, and the vehicle accessory information. The vehicle basic information may include identification information, non-motorized (e.g., bicycle) structural parameter information, non-motor vehicle maintenance information and the like of the vehicle. The vehicle power information may include a travelling speed, acceleration and the like of the vehicle. The vehicle accessory information may include type and content.

It should be noted that, in order to be able to specify the second traffic service information that is more in line with the traffic operation, the second traffic service information may further include: vehicle expansion information, and the vehicle expansion information is used to supplement additional information, for example, a license plate of the vehicle.

In some alternative implementations of the present embodiment, the traffic environment information includes: signal light information and/or weather information.

In this implementation, the traffic environment information may be information related to a traffic environment around the other traffic participants and the target vehicle, for example, signal light information, weather information, display speed of display screen, etc.

In this implementation, the traffic environment information may be used to assist in generating the traffic travelling strategy.

In some alternative implementations of the present embodiment, the roadside sensing facility 202 includes at least one of: a camera, a millimeter-wave radar, or a lidar.

In this implementation, the camera may be used to acquire the traffic environment information around the other traffic participants and the target vehicle, the millimeter-wave radar and the lidar may be used to acquire the second traffic service information of the target vehicle output by the onboard subsystem and the first traffic service information of the other traffic participants output by the traveler subsystem.

In an embodiment of the present disclosure, the roadside computing facility may meet at least one of the following requirements: MTBF is not less than 50000h, equipment availability should not be less than 99.999%; working temperature: - 30°C~+85°C; equipment has anti-surge, anti-static, high shock resistance and other characteristics; working humidity: 5%~95%, no condensation; waterproof and dustproof grade: not lower than IP66.

In an example, a sensing camera may meet at least one of the following requirements: a bullet camera, a dome camera, or a fisheye camera may be selected as required; the camera may have computing power and AI processing capabilities, and has a certain precision of sensing recognition and localization capabilities; the sensing camera having traffic event detection function may meet GB/T 28789 and related standard requirements; the sensing camera having monitoring and law enforcement function may meet GB/T 28181, GA/T 1127 and related standard requirements; or the sensing camera having traffic operation monitoring function may meet GB/T 24726, GB/T 33171 and related standard requirements.

The sensing camera may meet at least one of the following functional requirements: continuous video surveillance at traffic scenes, or on-site; multi-stream video recording; has self-diagnosis and alarm functions; support GPS or NTP clock synchronization, and can output millisecond timestamps.

The sensing camera may meet at least one of the following performance requirements: support output configurable H.265 or H.264 code stream, support definable code stream, and support MJPEG encoding at the same time, snap pictures adopt Joint Photographic Experts Group (JPEG) encoding and Smart JPEG compression, and the picture quality can be set; support continuous transmission of snap pictures after disconnecting from the network; may adopt Complementary Metal Oxide Semiconductor (CMOS) with no less than 1/1.8 inch and 4 million pixels; or optional support for near-infrared fill light function, and the maximum infrared fill light distance is 100m.

The sensing camera may meet at least one of the following interface requirements: at least 1 RS-485 interface or 1 RS-232 interface, 1 RJ45 10M/100M/1000M adaptive Ethernet port; support Internet Server Application Programming Interface (ISAPI), GB/T28181 protocol, and support SDK secondary development; equipment may support Real Time Streaming Protocol (RTSP) and GB/T28181 two video protocols to output video stream.

The sensing camera may meet at least one of the following reliability requirements: working environment temperature: -30°C~+65°C; working environment humidity: 5%~95%, non-condensing; protection grade: IP66; Mean Time Between Failure (MTBF) is not less than 50000h; has anti-surge function; or an optical window is dust-proof and waterproof, and has functions such as heating and defogging and snow-removing.

When the roadside sensing camera is deployed and installed, it may meet at least one of the following: be deployed on a cross arm of an electric police pole or monitoring pole, with an installation position as close to the center of the road as possible; when the electric police pole or monitoring pole is not available, a signal light pole, or a new built pole may be considered; a deployment height may be 6-8m; trees and other obstructions may be avoided as much as possible in a sensing area, so as not to affect a sensing effect of the sensing device; or the installation of the device should be firm, and if necessary, a support structure may be installed to ensure stability.

In an example, the millimeter-wave radar deployed on the roadside may meet at least one of the following functional requirements: may detect no less than 256 detection targets within a range of 8 lanes (including forward and reverse lanes), and may track and monitor trajectories of the detection targets; support Global Positioning System (GPS) or Network Time Protocol (NTP) timing, and may output millisecond timestamps; support simultaneous data transmission to a plurality of servers.

The roadside millimeter-wave radar may meet at least one of the following performance requirements: the farthest detection distance: no less than 250m longitudinally; traffic flow detection precision: >95%; average vehicle speed: >95%; occupancy detection precision: >95%; queue length detection precision: >95%; speed measurement range: 0~220km/h; speed detection resolution: 0.6km/h; speed detection precision: 0.2km/h; distance detection resolution: 0.5m for short range, 2m for long range; distance detection precision: 0.1m for short range, 0.5m for long range; radar angle resolution supports up to 2°, and angle measurement precision supports up to 0.25°; or radar frame rate: not less than 10fps.

The roadside millimeter-wave radar may meet at least one of the following interface requirements: support at least one RS485/232 interface or one 10/100/1000M adaptive RJ45 interface; support connection to other devices through Transmission Control Protocol (TCP)/User Datagram Protocol (UDP) mode.

The roadside millimeter-wave radar may meet at least one of the following reliability requirements: working environment temperature: -30°C~+65°C; working environment humidity: 0%~95%, no condensation; protection grade: IP65; collision/vibration withstand degree: 100g/rms; 14g/rms; MTBF≥50000h; with voltage overload protection, surge protection, equipment lightning protection shielding; or may work stably in all weather environments, including rain, fog, snow, strong wind, ice, dust, etc.

The lidar deployed on the roadside may meet at least one of the following functional requirements: support radar data acquisition, visualization, storage and playback functions; support GPS, NTP or Precise Time Protocol (PTP) time calibration, output millisecond timestamps; support point cloud output, tracking target output point cloud and tracking target output; support a plurality of echo detection method settings; or support multi-radar data fusion function.

The roadside lidar may meet at least one of the following performance requirements: ranging: 150m@10% NIST, range and sensing distance not less than 200m; distance precision: ≤±3cm, root mean square error: ≤3cm; number of tracking targets not less than 128; angle of view (vertical): not less than 25°; angle of view (horizontal): more than 100°; average vertical angle resolution not less than 0.2°; average horizontal angle resolution not less than 0.2°; frame rate: not less than 10Hz; protection grade: biosafety grade 1 or exemption grade; false alarm rate (@100klx)<0.01%; active anti-crosstalk/interference function; work normally under weather conditions such as rain, snow, fog, haze; or 24V power supply voltage.

The roadside lidar may meet at least one of the following interface requirements: at least one 10M/100M/1000M adaptive RJ45 Ethernet port or RS485 interface; wide voltage support, compatible with 24V±20%; support UDP/TCP communication protocol; application layer support Message Queuing Telemetry Transport (MQTT) protocol or protobuf protocol; or support NTP time synchronization protocol, optional PPS, PTP, PTPv2, GPS and other protocols.

The roadside lidar may meet at least one of the following reliability requirements: working environment temperature: -30°C~+65°C; working environment humidity: 0%~95%, no condensation; protection grade: IP67; or MTBF time not less than 50000h.

It should be noted that, the traffic environment information may be acquired by the camera of the roadside sensing facility or the traffic environment information sent by the traffic safety and management facility.

In addition, this implementation is not limited to acquiring data through the camera, the millimeter-wave radar, and the lidar, but data may alternatively be acquired through other devices. Such other devices may also be included within the scope of the present disclosure as long as the purpose of generating the traffic strategy is achieved.

In some alternative implementations of the present embodiment, the roadside computing facility 203 includes: a computing unit, an MEC facility, or an edge cloud.

In this implementation, the roadside computing facility may be a single computing unit, or may be a Multiple-Access Edge Computing (MEC) facility or an edge cloud.

In this implementation, various roadside computing facilities may be used to meet different roadside computing requirements.

In some alternative implementations of the present embodiment, the basic supply facility 201 includes at least one of: a power supply, a switch, a pole-mounted box/cabinet, or an optical fiber.

In this implementation, basic supply may be provided through the power supply, the switch, the pole-mounted box/cabinet, and the optical fiber.

It should be noted that, any equipment that can provide basic supply for the roadside computing facility and the roadside sensing facility may be included within the scope of the present disclosure.

With further reference to Fig. 3, Fig. 3 shows a flow 300 of a traffic control method based on a roadside sensing system according to an embodiment of the present disclosure. The traffic control method based on a roadside sensing system may include the following steps.

Step 301, acquiring roadside sensing information.

In the present embodiment, an executing body (for example, the roadside sensing facility 102 shown in Fig. 1) of the traffic control method based on a roadside sensing system may acquire the roadside sensing information. The roadside sensing information may be information acquired by the roadside sensing facility 102 and generated by traffic participants running on a target road section, such as traffic service information, intention information, traffic environment information, location, or collection time.

Step 302, processing the roadside sensing information to obtain sensing result information.

In the present embodiment, the executing body may process the roadside sensing information to obtain the sensing result information. The roadside result information may be a result obtained by processing the roadside sensing information, for example, traffic travelling strategy, traffic event type; event location; lane on which an event occurs; event affected area; event duration; event priority; event involved traffic participant information, etc.

In the technical solution of the present disclosure, the collection, storage, use, processing, transmission, provision, and disclosure of the roadside sensing information involved are all in compliance with relevant laws and regulations, and do not violate public order and good customs.

In the traffic control method based on a roadside sensing system provided by an embodiment of the present disclosure, the roadside sensing information is acquired by the roadside sensing facility; then the roadside sensing information is stored and processed by the roadside computing facility to obtain the roadside result information, so that behavior of the traffic participants on the target road may be controlled through the roadside result information, thereby strengthening the control of traffic behavior.

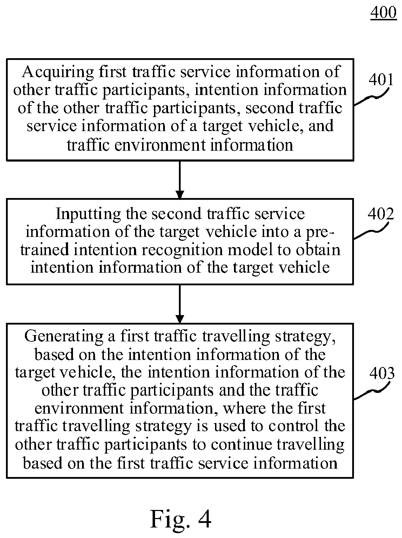

With further reference to Fig. 4, Fig. 4 shows a flow 400 of a traffic control method based on a roadside sensing system according to an embodiment of the present disclosure. The traffic control method based on a roadside sensing system may include the following steps.

Step 401, acquiring first traffic service information of other traffic participants, intention information of the other traffic participants, second traffic service information of a target vehicle, and traffic environment information.

In the present embodiment, an executing body (for example, the roadside sensing facility 102 shown in Fig. 1) of the traffic control method based on a roadside sensing system may acquire the first traffic service information of the other traffic participants, the intention information of the other traffic participants, the second traffic service information of the target vehicle, and the traffic environment information. The appearers may be participants other than motor vehicles among traffic participants, for example, cyclists of bicycles, pedestrians, and the like. The intention information may be used to represent pre-implemented traffic behavior of the other traffic participants, e.g., need to cross a road, etc. The first traffic service information may be used to describe traffic-related events or states of the other traffic participants. The second traffic service information may be used to describe traffic-related events or states of the target vehicle. The traffic environment information may be information related to an environment around the other traffic participants and the target vehicle, for example, a color displayed by traffic lights, a temperature displayed by a weather monitoring facility, and the like.

In the present embodiment, the intention information of the other traffic participants may include: intention information of the other traffic participants input into the traveler subsystem by the other traffic participants input the through touch buttons or input buttons on a navigation interface or a map interface of the traveler subsystem.

In an example, a user current location may be displayed on the navigation interface or the map interface, and when other traffic participants need to cross the road, the user may operate the touch button (for example, a button for going straight) at the road, so that the traveler subsystem acquires the intention information of the other traffic participants.

In an example, the input button may be a voice input button or a text input button. After other traffic participants operate the voice input button or the text input button, a voice or text input by the other traffic participants may be acquired, so that the traveler subsystem acquires the intention information of the other traffic participants.

It should be noted that the touch button may be a button corresponding to a direction guide arrow on the navigation interface or the map interface.

In the present embodiment, the acquiring first traffic service information of other traffic participants, may include: acquiring data collected by sensors of the other traffic participants to obtain the first traffic service information, for example, acceleration sensors, orientation sensors, gyroscope sensors, linear acceleration sensors, rotation vector sensors, and the like of the traveler subsystem.

In the technical solution of the present disclosure, the collection, storage, use, processing, transmission, provision, and disclosure of the intention information and the first traffic service information involved are all in compliance with relevant laws and regulations, and do not violate public order and good customs.

Step 402, inputting the second traffic service information of the target vehicle into a pre-trained intention recognition model to obtain intention information of the target vehicle.

In the present embodiment, the executing body may input the second traffic service information of the target vehicle into the pre-trained intention recognition model, to obtain a behavior classification of the target vehicle, and determine the intention information of the target vehicle based on the behavior classification of the target vehicle.

Here, the intention recognition model may be determined based on the following steps: acquiring traffic behavior features of the target vehicle and corresponding behavior category labels, and the category labels may be used to represent the intention information of the target vehicle; then, using the traffic behavior features of the target vehicle and the corresponding behavior category labels for training to obtain the intention recognition model. During training, an executing body may use the traffic behavior features of the target vehicle as an input of the intention recognition model, and use the behavior category labels corresponding to the traffic behavior features of the target vehicle as an expected output to obtain the intention recognition model. The machine learning model may be a probability model, a classification model or other classifiers in the existing technology or future development technologies. For example, the machine learning model may include any one of the following: a decision tree model (XGBoost), a logistic regression model (LR), or a deep neural network model (DNN).

It should be noted that the traffic behavior features may be used to represent traffic behavior of the target vehicle, for example, running at a speed of 30 km/h.

In the present embodiment, before inputting the second traffic service information of the target vehicle into a pre-trained intention recognition model to obtain intention information of the target vehicle, the traffic control method based on a roadside sensing system further includes: acquiring data collected by sensors in an onboard subsystem to obtain the second traffic service information of the target vehicle. The second traffic service information may be used to describe traffic-related events or states of the target vehicle, where the motor vehicles may include the target vehicle, airplanes, motorcycles, and the like.

In the present embodiment, the sensors in the onboard subsystem may include: intake pressure sensors, air flow meters, vehicle speed sensors, temperature sensors, shaft speed sensors, pressure sensors, steering devices with angle sensors, torque sensors, hydraulic sensors, vehicle speed sensors, acceleration sensors, body height sensors, roll angle sensors, angle sensors, and the like.

In the technical solution of the present disclosure, the collection, storage, use, processing, transmission, provision, and disclosure of the second traffic service information involved are all in compliance with relevant laws and regulations, and do not violate public order and good customs.

Step 403, generating a first traffic travelling strategy, based on the intention information of the target vehicle, the intention information of the other traffic participants and the traffic environment information, where the first traffic travelling strategy is used to control the other traffic participants to continue travelling based on the first traffic service information.

In the present embodiment, the executing body may generate the first traffic travelling strategy, based on the intention information of the other traffic participants, the intention information of the target vehicle and the traffic environment information. The first traffic travelling strategy may be used to control the mode the other traffic participants and the target vehicle are to be run, for example, the target vehicle is slowed down to allow the other traffic participants to pass the target road (i.e., passing the target road is the mode to be run by the appearers).

In an example, before executing step 403, the traffic control method based on a roadside sensing system may further include: pre-establishing a corresponding relationship between the intention information of the other traffic participants, the intention information of the target vehicle, the traffic environment information, and the first traffic travelling strategy, so that after the onboard subsystem obtains the intention information of the target vehicle, the corresponding first traffic travelling strategy may be obtained based on the intention information of the other traffic participants, the intention information of the target vehicle and the traffic environment information.

The traffic control method based on a roadside sensing system provided by an embodiment of the present disclosure, first acquiring the first traffic service information of the other traffic participants, the intention information of the other traffic participants, the second traffic service information of the target vehicle, and the traffic environment information; then generating the first traffic travelling strategy, based on the intention information of the target vehicle, the intention information of the other traffic participants and the traffic environment information, where the first traffic travelling strategy may be used to control the other traffic participants to continue travelling based on the first traffic service information. The method can formulate the corresponding first traffic travelling strategy for the other traffic participants and the target vehicle based on the intention information of the other traffic participants, the intention information of the target vehicle and the traffic environment information, so as to control the traffic behavior of the other traffic participants and the target vehicle, thereby strengthening the control of traffic behavior.

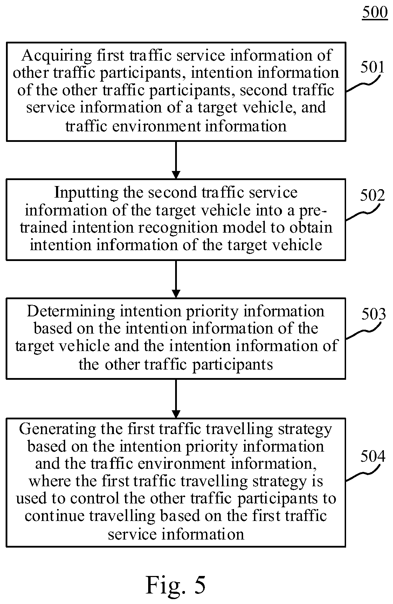

With further reference to Fig. 5, Fig. 5 shows a flow 500 of a traffic control method based on a roadside sensing system according to an embodiment of the present disclosure. The traffic control method based on a roadside sensing system may include the following steps.

Step 501, acquiring first traffic service information of other traffic participants, intention information of the other traffic participants, second traffic service information of a target vehicle, and traffic environment information.

In the present embodiment, an executing body (for example, the roadside sensing facility 102 shown in Fig. 1) of the traffic control method based on a roadside sensing system may acquire the first traffic service information of the other traffic participants, the intention information of the other traffic participants, the second traffic service information of the target vehicle, and the traffic environment information. The appearers may be participants other than motor vehicles among traffic participants, for example, cyclists of bicycles, pedestrians, and the like. The intention information may be used to represent pre-implemented traffic behavior of the other traffic participants, e.g., need to cross a road, etc. The first traffic service information may be used to describe traffic-related events or states of the other traffic participants. The second traffic service information may be used to describe traffic-related events or states of the target vehicle. The traffic environment information may be information related to an environment around the other traffic participants and the target vehicle, for example, a color displayed by traffic lights, a temperature displayed by a weather monitoring facility, and the like.

Step 502, inputting the second traffic service information of the target vehicle into a pre-trained intention recognition model to obtain intention information of the target vehicle.

In the present embodiment, the executing body may input the second traffic service information of the target vehicle into the pre-trained intention recognition model, to obtain a behavior classification of the target vehicle, and determine the intention information of the target vehicle based on the behavior classification of the target vehicle.

Here, the intention recognition model may be determined based on the following steps: acquiring traffic behavior features of the target vehicle and corresponding behavior category labels, and the category labels may be used to represent the intention information of the target vehicle; then, using the traffic behavior features of the target vehicle and the corresponding behavior category labels for training to obtain the intention recognition model. During training, an executing body may use the traffic behavior features of the target vehicle as an input of the intention recognition model, and use the behavior category labels corresponding to the traffic behavior features of the target vehicle as an expected output to obtain the intention recognition model. The machine learning model may be a probability model, a classification model or other classifiers in the existing technology or future development technologies. For example, the machine learning model may include any one of the following: a decision tree model (XGBoost), a logistic regression model (LR), or a deep neural network model (DNN).

It should be noted that the traffic behavior features may be used to represent traffic behavior of the target vehicle, for example, running at a speed of 30 km/h.

In the technical solution of the present disclosure, the collection, storage, use, processing, transmission, provision, and disclosure of the second traffic service information involved are all in compliance with relevant laws and regulations, and do not violate public order and good customs.

Step 503, determining intention priority information based on the intention information of the target vehicle and the intention information of the other traffic participants.

In the present embodiment, the executing body may determine the intention priority information based on the intention information of the target vehicle and the intention information of the other traffic participants. The intention priority information may be used to represent priority of the intention information.

In an example, before executing step 503, the traffic control method based on a roadside sensing system may further include: pre-establishing priority corresponding to the intention information of the other traffic participants and priority corresponding to the intention information of the target vehicle, and then, determining the intention priority information, based on the priority corresponding to the intention information of the other traffic participants and the priority corresponding to the intention information of the target vehicle.

It should be noted that the priority corresponding to the intention information of the other traffic participants and the priority corresponding to the intention information of the target vehicle may be based on the principle of traffic comity, for example, yielding to pedestrians; or based on priority corresponding to an urgency level of the intention information of the other traffic participants and an urgency level of the intent information of the target vehicle, and the . The urgency level may be used to represent the level of priority of to-be-executed traffic behavior.

Step 504, generating the first traffic travelling strategy based on the intention priority information and the traffic environment information.

In the present embodiment, the executing body may generate the first traffic travelling strategy based on the intention priority information and the traffic environment information. The first traffic travelling strategy may be used to control the mode the other traffic participants and the target vehicle are to be run, for example, the target vehicle is slowed down to allow the other traffic participants to pass the target road (i.e., passing the target road is the mode to be run by the appearers).

In an example, before executing step 504, the traffic control method based on a roadside sensing system may further include: pre-establishing a corresponding relationship between the intention priority information, the traffic environment information, and the first traffic travelling strategy, so that the onboard subsystem may obtain the corresponding first traffic travelling strategy based on the intention priority information and the traffic environment information.

Correspondingly, in this example, the executing body may pre-establish the corresponding relationship between the intention priority information, the traffic environment information, and the first traffic travelling strategy, so that the first traffic travelling strategy may be generated based on the intention priority information and the traffic environment information.

In an example, according to the congestion situation of a target road, corresponding weights may be set for the intention priority information and the traffic environment information respectively, so that based on the intention priority information and the corresponding weight, and the traffic environment information and the corresponding weight, the corresponding first traffic travelling strategy may be acquired from a plurality of traffic travelling strategies.

In an example, the executing body may also preset the priority corresponding to the intention information of the target vehicle and the priority the intention information of the other traffic participants.

It should be noted that the priority corresponding to the intention information of the other traffic participants and the priority corresponding to the intention information of the target vehicle may be based on the principle of traffic comity, for example, yielding to pedestrians; or based on priority corresponding to an urgency level of the intention information of the other traffic participants and an urgency level of the intent information of the target vehicle. The urgency level may be used to represent the level of priority of to-be-executed traffic behavior.

Correspondingly, in this example, the executing body may determine initial intention priority information in advance using the priority corresponding to the intention information of the target vehicle and the intention information of the other traffic participants; then, based on the traffic environment information, determine final intention priority information; and based on the final intention priority information, generate the first traffic travelling strategy.

In an example, signal light information included in the traffic environment information is expected to turn green in fifteen seconds, so that the other traffic participants continue travelling based on the first traffic service information.

In the present embodiment, specific operations of steps 501 and 502 have been described in detail in steps 401 and 402 in the embodiment shown in Fig. 4, and detailed description thereof will be omitted.

As can be seen from Fig. 5, compared with the embodiment corresponding to Fig. 4, the traffic control method based on a roadside sensing system in the present embodiment highlights the steps of determining the intention priority information based on the intention information of the other traffic participants, the intention information of the target vehicle and the traffic environment information; and generating the first traffic traveling strategy based on the intention priority information. Therefore, the solution described in the present embodiment may acquire the first traffic service information of the other traffic participants, the intention information of the other traffic participants, the second traffic service information of the target vehicle, and the traffic environment information; then generate the intention priority information, based on the intention information of the target vehicle, the intention information of the other traffic participants, and the traffic environment information; and then generate the first traffic travelling strategy based on the intention priority information, and the first traffic travelling strategy may be used to control the other traffic participants to continue travelling based on the first traffic service information. The method can determine the intention priority information based on the intention information of the other traffic participants and the intention information of the target vehicle; then, formulate the corresponding first traffic travelling strategy for the other traffic participants and the target vehicle based on the intention priority information and the traffic environment information, so as to control the traffic behavior of the other traffic participants and the target vehicle, thereby strengthening the control of traffic behavior.

In some alternative implementations of the present embodiment, the generating the first traffic travelling strategy based on the intention priority information and the traffic environment information, includes: in response to priority corresponding to the intention information of the other traffic participants being higher than priority corresponding to the intention information of the target vehicle, determining whether the target vehicle is within a first preset area, where the first preset area is an area that allows the target vehicle to execute the first traffic travelling strategy; and in response to the target vehicle being within the first preset area, generating the first traffic travelling strategy based on the intention priority information and the traffic environment information.

In this implementation, the executing body may determine whether the target vehicle is within the first preset area, in response to that the priority corresponding to the intention information of the other traffic participants is higher than the priority corresponding to the intention information of the target vehicle, the first preset area being the area that allows the target vehicle to execute the first traffic travelling strategy; and generate the first traffic travelling strategy based on the intention priority information and the traffic environment information, in response to that the target vehicle is within the first preset area.

In this implementation, the executing body may determine whether the target vehicle can adjust its second traffic service information to preset traffic service information through the first preset area, so that the other traffic participants continue travelling based on the first traffic service information.

In an example, the preset traffic service information may be traffic service information corresponding to a speed of the target vehicle being 0.

In some alternative implementations of the present embodiment, the traffic control method based on a roadside sensing system further includes: in response to the target vehicle not being within the first preset area, generating a second traffic travelling strategy, where the second traffic travelling strategy is used to control the target vehicle to continue travelling based on the second traffic service information; and sending the second traffic travelling strategy to the traveler subsystem.

In this implementation, when the target vehicle is not located in the first preset area, the second traffic travelling strategy may be generated, and the second traffic travelling strategy may be used to control the target vehicle to continue travelling based on the second traffic service information.

In this implementation, the executing body may determine whether the target vehicle can continue travelling based on the second traffic service information through the first preset area.

In an example, the other traffic participants stop running.

In some alternative implementations of the present embodiment, the traffic control method based on a roadside sensing system further includes: in response to the target vehicle not being within the first preset area, determining a third traffic travelling strategy based on the second traffic service information and the first traffic service information, where the third traffic travelling strategy is used to control the target vehicle to travel based on the third traffic service information and to control the other traffic participants to travel based on fourth traffic service information.

In this implementation, the executing body may determine the third traffic travelling strategy based on the second traffic service information and the first traffic service information, in response to the target vehicle being not within the first preset area, and the third traffic travelling strategy may be used to control the target vehicle to travel based on the third traffic service information and to control the other traffic participants to travel based on the fourth traffic service information.

It should be noted that, in order to avoid collisions between the other traffic participants and the target vehicle, in an embodiment of the present disclosure, the executing body may determine the third traffic travelling strategy through the first traffic service information of the other traffic participants and the second traffic service information of the target vehicle by using a preset algorithm model, so as to formulate the corresponding traffic service information for the other traffic participants and the target vehicle through negotiation.

In an example, based on running speeds of the target vehicle and the other traffic participants, and relative distances between the target vehicle and the other traffic participants, position points where the target vehicle and the other traffic participants may collide may be determined, and then the traffic service information of the other traffic participants and the target vehicle may be adjusted, so that the other traffic participants and the target vehicle do not collide and can be still in running states.

In this implementation, through the third traffic travelling strategy, the target vehicle may be controlled to run based on the third traffic service information and the other traffic participants may be controlled to run based on the fourth traffic service information, so as to avoid any traffic jam caused by interruption of running.

In some alternative implementations of the present embodiment, the second traffic service information includes at least one of: vehicle basic information, vehicle power information, or vehicle accessory information.

In this implementation, the second traffic service information may include the vehicle basic information, the vehicle power information, and the vehicle accessory information. The vehicle basic information may include identification information, non-motorized (e.g., bicycle) structural parameter information, non-motor vehicle maintenance information and the like of the vehicle. The vehicle power information may include a travelling speed, acceleration and the like of the vehicle. The vehicle accessory information may include type and content.

It should be noted that, in order to be able to specify the second traffic service information that is more in line with the traffic operation, the second traffic service information may further include: vehicle expansion information, and the vehicle expansion information is used to supplement additional information, for example, a license plate of the vehicle.

In some alternative implementations of the present embodiment, the traffic environment information includes: signal light information and/or weather information.

In this implementation, the traffic environment information may be information related to a traffic environment around the other traffic participants and the target vehicle, for example, signal light information, weather information, display speed of display screen, etc.

In this implementation, the traffic environment information may be used to assist in generating the traffic travelling strategy.

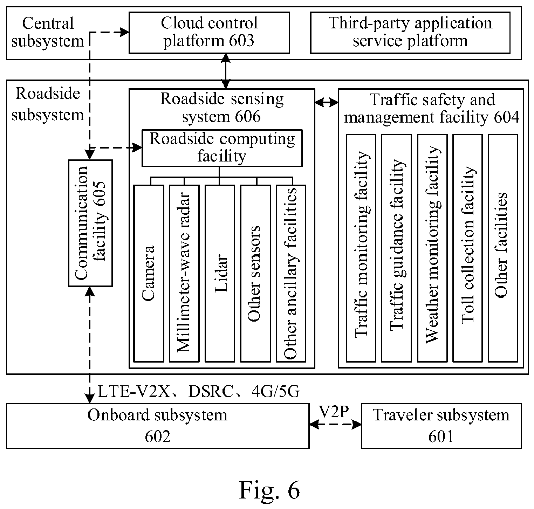

With further reference to Fig. 6, a traffic control system may include a traveler subsystem 601, an onboard subsystem 602, a central subsystem and a roadside subsystem; where the central subsystem includes a cloud control platform and a third-party application service platform 603, and the roadside subsystem may include a traffic safety and management facility 604, a communication facility 605, and the roadside sensing system 606.

The communication facility 605 is configured to acquire roadside sensing information; the roadside sensing facility is configured to acquire the roadside sensing information; the roadside computing facility is configured to store and process the roadside sensing information to obtain sensing result information; and send the roadside sensing information to the cloud control platform 603; and the cloud control platform 603 is configured to receive the roadside sensing information, and transmit the roadside sensing information to the onboard subsystem 602, the traveler subsystem 601 and the traffic safety and management facility 604.

In an example, the communication facility 605 is configured to acquire first traffic service information of other traffic participants output by the traveler subsystem 601, and second traffic service information of a target vehicle output by the onboard subsystem 602; and the roadside sensing facility is configured to acquire traffic environment information output by the traffic safety and management facility.

The roadside computing facility is configured to input the first traffic service information and the second traffic service information into a pre-trained intention recognition model respectively, to obtain intention information of the other traffic participants and intention information of the target vehicle; and determine a first traffic travelling strategy based on the intention information of the target vehicle, the intention information of the other traffic participants and the traffic environment information; and send the first traffic travelling strategy to the cloud control platform 603.

The cloud control platform 603 is configured to receive the first traffic travelling strategy, and transmit the first traffic travelling strategy to the onboard subsystem 602, the traveler subsystem 601 and the traffic safety and management facility 604, where the first traffic travelling strategy is used to control the other traffic participants to continue travelling based on the first traffic service information, and to control whether to adjust a working state of the traffic safety and management facility.

In the present embodiment, the roadside sensing system 606 is deployed on the roadside, which is a system composed of computing facilities, sensing facilities, and basic supply facilities (i.e., related auxiliary equipment) for real-time detection, identification and positioning of road traffic participants, traffic events, traffic operation conditions, and the like.

In an example, a spatial coordinate system of the roadside sensing system may adopt the CGCS2000 coordinate system, and projection may adopt the Universal Transverse Mercator (UTM). A time coordinate system of the roadside sensing system may adopt the Coordinated Universal Time (UTC).

In an example, the roadside sensing system may have a standard clock source synchronization function, and may support clock synchronization protocols such as GPS, NTP or PTP, and should have the function of unified time calibration for access devices. A time synchronization error of each device in the system is not more than 5ms.

In an example, for a high-definition map used by the roadside sensing system, map elements should be as diverse as possible, horizontal and vertical road traffic markings should be clear and accurate, and the map may meet T/CSAE 185 and related standard requirements.

In an example, detection timestamps output by sensing cameras connected to the same roadside computing facility may be consistent, and detection timestamp errors of different sensing facilities are not greater than 100ms.

In an example, network communication and data interaction may be performed between the roadside sensing facility and the roadside computing facility via optical fibers and access switches, and a one-way bandwidth of the access switch should not be less than 15Mbps.

In an example, the roadside sensing system may be compatible with multiple types of devices and meet at least one of the following requirements: support docking with RSU, lidar, millimeter wave radar, camera and other equipment; support docking with traffic monitoring and law enforcement equipment, traffic signal control machines, weather environment monitoring equipment, etc.; support simultaneous access to multiple different types or models of equipment; can perform adding or deleting operations on access devices, support state monitoring of access devices; or can realize data interaction with access devices.

Correspondingly, in this example, the roadside computing facility may have at least one of the following functions: support access to devices such as cameras, millimeter-wave radars, and lidars; support acquisition of video streams from cameras and perform functions such as video decoding, target detection, target tracking, or target positioning, acquisition of structured data from millimeter-wave radars, acquisition of point cloud data from lidars, and perform functions such as target fusion positioning, tracking; store images, videos and business data according to regulations, which may support remote or local data query and retrieval; according to vehicle-road collaboration application requirements, may provide Vehicle-to-Everything (V2X) application services, including the production, sending and receiving, parsing and processing of messages, etc. to manage the system and access devices, including parameter configuration, OTA upgrade, equipment operation and maintenance management, remote power on/off/restart, log management, high-precision clock synchronization, etc.; support the provision of uninterrupted business services, even when the network is disconnected from the cloud control platform.

The roadside computing facility may meet at least one of the following performance requirements: flexibly support different equipment selection and configuration schemes, and computing power supports simultaneous access of no less than 4 cameras, 4 millimeter-wave radars and 1 lidar; an ability of the roadside computing facility to integrate sensing and identification of traffic participants, traffic events, etc., including detection accuracy rate, delay, positioning precision, etc.; or a sensed structured data output frequency may meet the application requirements of different scenarios.

The roadside computing facility may meet at least one of the following interface requirements: the roadside computing facility may have at least two Ethernet interfaces; support access to the cloud control platform, send roadside sensing result information to the cloud control platform, and develop more vehicle-road collaboration application services, the roadside computing facility and the cloud control platform should use RJ 45, optical fiber, USB, RS232, RS 485 and other interface methods, support network transmission over 10000Mbps; also optional 4G/5G/WiFi (Wireless-Fidelity) and other access modules, support wireless backhaul; support camera device access, may use Ethernet interface method, support SDK (Software Development Kit), GB/T 28281 or RTSP and other protocols; support radar equipment access, may use Ethernet or RS 485 interface, support binary, hexadecimal or JSON and other formats of data transmission; support RSU equipment access, may use Ethernet or 4G/5G and other interface methods, support ASN.1 or JSON format data transmission; may support the access of other traffic safety facilities or traffic management facilities, may use interface methods such as Ethernet or 4G/5G, and content and format of data interaction may conform to the standard specifications issued by road traffic or public security.

In an example, the roadside sensing system may realize the ability of fusion processing and intelligent analysis of different access data, and meet at least one of the following requirements: provide an accurate time reference and spatial transformation relationship to ensure time and space synchronization between different sensors; support the fusion processing of radar and camera raw sensing data or structured data; support the detection, identification of pedestrians, motor vehicles, non-motor vehicles, obstacles or other road traffic participants; support the detection, identification of road traffic events; or support the detection and identification of traffic operation conditions.

In an example, the roadside sensing system may include corresponding interfaces and data services: docking and data interaction with RSU, the content of interface and data interaction may meet T/ITS XXXX standard requirements; docking and data interaction with the cloud control platform, the content of interface and data interaction may meet T/ITS XXXX standard requirements; the content of interface and data interaction with traffic monitoring law enforcement equipment, traffic signal control machines, and weather environment monitoring equipment may meet relevant standard requirements.

In an example, the types of traffic participants that the roadside sensing system can identify include, but are not limited to: motor vehicles: such as cars, trucks, buses, emergency or special vehicles, etc., the classification of motor vehicles meets the GA 802 standard; non-motor vehicles: such as bicycles, motorcycles, tricycles, bicycles; pedestrians; scattered or low obstacles: such as cones, triangle warning signs, animals, cartons, tires; special targets: stone piers, water horses, columns, etc.

In an example, the roadside sensing system may identify static and dynamic feature information of traffic participants, and the static feature information of the traffic participants includes but is not limited to: traffic participant type; target size: three-dimensional size; target size confidence; participant corner data; license plate; color; vehicle brand; driver information.

In addition, the dynamic feature information of the traffic participants may meet T/ITS XXXX standard requirements, including but not limited to: location information: latitude and longitude, altitude; location confidence; speed; speed confidence; four-axis acceleration; acceleration confidence; heading angle; heading angle confidence; target tracking time; vehicle historical trajectory; vehicle path prediction.

In an example, the above traffic event type may meet GB/T 28789, GB/T 29100 and related standard requirements, including but not limited to: stop events; retrograde events; pedestrian events; throwing object events; congestion events; low/speeding events; traffic accidents; motor vehicle departures; road construction; other custom events.

In an example, the sensing result information may meet T/ITS XXXX standard requirements, including but not limited to the following: traffic event type; event location; lane on which an event occurs; event affected area; event duration; event priority; event involved traffic participant information.

Due to the incoordination among people, vehicles, facilities and the environment, the roadside computing facility causes sudden chaotic events in normal traffic order.

The cloud control platform 603 is a platform system serving vehicle-road collaboration services, has basic service capabilities such as real-time information fusion and sharing, real-time computing orchestration, intelligent application orchestration, big data analysis, or information security, and may provide collaborative applications and data services such as assisted driving, autonomous driving, transportation safety, or traffic management for smart cars, management and service organizations, and terminal users.

The traveler subsystem is composed of various information terminals or other information processing devices carried by the other traffic participants. The traveler subsystem may be electronic products that interact with the user in one or more ways (a keyboard, a touchpad, a touchscreen, a remote control, a voice interaction or a handwriting device) such as PCs (Personal Computers), mobile phones, smartphones, PDAs (Personal Digital Assistants), wearable devices, PPCs (Pocket PCs), tablets, smart car machines, smart TVs, smart speakers, tablets, laptops and desktop computers, etc.; the traveler subsystem may be a non-motor vehicle with a communication function. When the traveler subsystem 601 is software, it may be implemented as a plurality of pieces of software or a plurality of software modules, or may be implemented as a single piece of software or a single software module, which is no specifically limited herein.

The onboard subsystem may include an onboard terminal, or an onboard computing control module, an onboard gateway, a router, and the like.

The roadside subsystem may include a roadside communication facility, a roadside sensing facility, a roadside computing facility, etc., and may also include various equipment and facilities for traffic safety, traffic management, and travel services.

Correspondingly, in this example, traffic safety management may include at least one of the following: emergency event notification, emergency vehicle scheduling and priority passing, safety monitoring of transport vehicles and drivers, overload and over-limit management, or safety protection of vulnerable traffic groups.

Traffic management includes at least one of the following: notification of traffic laws and regulations, dynamic optimization of traffic signals, or monitoring of traffic flow.

Travel services include at least one of the following: real-time guidance and navigation; information reminders such as construction, traffic events, and traffic lights; suggesting itinerary, or point-of-interest notification.

The central subsystem may include: central decryption, central switching, service component nodes, service routers, central access nodes, etc., with network management, business support, and service capabilities.

In some alternative implementations of the present embodiment, the traffic safety and management facility 604 includes: a traffic monitoring facility, a traffic guidance facility, and a weather monitoring facility.

In some alternative implementations of the present embodiment, the onboard subsystem 602 includes at least one of: an onboard terminal, an onboard computing control module, an onboard gateway, or a router.

A working state of the traffic safety and management facility 604 may include: a traffic monitoring facility, a traffic guidance facility, a weather monitoring facility, a toll collection facility, and other facilities.

It should be noted that the roadside sensing system 606 may perform data transmission with the onboard subsystem 602 and the traveler subsystem 601 through the communication facility 605. The communication facility 605 may use LTE Vehicle to Everything (LTE-V2X), Dedicated Short Range Communication (DSRC), 4G (the 4 Generation mobile communication technology)/5G (5th-Generation Mobile Communication Technology) and other transmission methods to transmit data. In addition, the onboard subsystem 602 and the traveler subsystem 601 may perform data transmission through Vehicle to Pedestrian (V2P).

In an example, the roadside sensing system 606 may also send operation and maintenance data to the cloud control platform 603, such as receiving operation and maintenance data generated when the traffic safety and management facility 604 and/or the roadside sensing facility operates, so that the cloud control platform 603 may detect the operation of the roadside sensing system 606 and the traffic safety and management facility 604.

In addition, after the roadside sensing system 606 sends the first traffic travelling strategy to the cloud control platform 603, the cloud control platform 603 may summarize the first traffic travelling strategies output by a plurality of roadside sensing systems on the target road.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The server may be a cloud server, a distributed system server, or a server combined with a blockchain.

Artificial intelligence is a discipline that studies computers to simulate certain thinking processes and intelligent behaviors of humans (such as learning, reasoning, thinking, planning, etc.). It has both hardware-level technology and software-level technology. Artificial intelligence hardware technologies generally include technologies such as sensors, dedicated artificial intelligence chips, cloud computing, distributed storage, and big data processing; artificial intelligence software technologies mainly include computer vision technology, speech recognition technology, natural speech processing technology, and machine learning/depth Learning, big data processing technology, knowledge graph technology and other major directions.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above particular implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the principles of the present disclosure are intended to be included within the scope of the present disclosure.

## Claims

1. A roadside sensing system, comprising: a basic supply facility (101, 201), a roadside computing facility (103, 203) and a roadside sensing facility (102, 202) set on a target road section; wherein,
the basic supply facility (101, 201) is connected to the roadside computing facility (103, 203) and the roadside sensing facility (102, 202), and the basic supply facility (101, 201) is configured to provide basic supply to the roadside computing facility (103, 203) and the roadside sensing facility (102);
the roadside sensing facility (102, 202) is configured to acquire roadside sensing information; and
the roadside computing facility (103, 203) is configured to store and process the roadside sensing information to obtain sensing result information.

2. The system according to claim 1, wherein the roadside sensing facility (102, 202) is configured to:
acquire first traffic service information of other traffic participants, intention information of the other traffic participants, second traffic service information of a target vehicle, and traffic environment information; and
the roadside computing facility (103, 203) comprises:
an intention obtaining module, configured to input the second traffic service information into a pre-trained intention recognition model to obtain intention information of the target vehicle; and
a strategy generating module, configured to generate a first traffic travelling strategy, based on the intention information of the other traffic participants, the intention information of the target vehicle and the traffic environment information, wherein the first traffic travelling strategy is used to control the other traffic participants to continue travelling based on the first traffic service information;

3. The system according to claim 2, wherein the strategy generating module comprises:
a priority determining unit, configured to determine intention priority information based on the intention information of the target vehicle and the intention information of the other traffic participants; and
a strategy generating unit, configured to generate the first traffic travelling strategy based on the intention priority information and the traffic environment information;
preferably, the strategy generating unit is configured to:
in response to priority corresponding to the intention information of the other traffic participants being higher than priority corresponding to the intention information of the target vehicle, determine whether the target vehicle is within a first preset area, wherein the first preset area is an area that allows the target vehicle to execute the first traffic travelling strategy; and
in response to the target vehicle being within the first preset area, generate the first traffic travelling strategy based on the intention priority information and the traffic environment information.

4. The system according to claim 3, wherein the strategy generating unit is further configured to:
in response to the target vehicle not being within the first preset area, generate a second traffic travelling strategy, wherein the second traffic travelling strategy is used to control the target vehicle to continue travelling based on the second traffic service information.

5. The system according to claim 3, wherein the strategy generating module is further configured to:
in response to the target vehicle not being within the first preset area, determine a third traffic travelling strategy based on the first traffic service information and the second traffic service information, wherein the third traffic travelling strategy is used to control the target vehicle to travel based on third traffic service information and to control the other traffic participants to travel based on fourth traffic service information.

6. The system according to any one of claims 1-5, wherein the roadside sensing facility (102, 202) is configured to:
acquire the first traffic service information of the other traffic participants sent by a traveler subsystem, the second traffic service information of the target vehicle sent by an onboard subsystem, and the traffic environment information sent by a traffic safety and management facility.

7. The system according to any one of claims 1-6, wherein the roadside computing facility (103, 203) further comprises:
a strategy sending module, configured to send the first traffic travelling strategy to a cloud control platform, so that the cloud control platform sends the first traffic travelling strategy to the onboard subsystem, the traveler subsystem, and the traffic safety and management facility, wherein the first traffic travelling strategy is used to control the other traffic participants to continue travelling based on the first traffic service information, and to control whether to adjust a working state of the traffic safety and management facility.

8. The system according to any one of claims 2-7, wherein the first traffic service information comprises at least one of: basic information of the other traffic participants, power information of the other traffic participants, or accessory information of the other traffic participants.

9. The system according to any one of claims 1-8, wherein the roadside sensing facility (102, 202) comprises at least one of: a camera, a millimeter-wave radar, or a lidar.

10. The system according to any one of claims 1-9, wherein the roadside computing facility (103, 203) comprises at least one of: a computing unit, an MEC facility, or an edge cloud.

11. The system according to any one of claims 1-10, wherein the basic supply facility comprises (101, 201) at least one of: a power supply, a switch, a pole-mounted box/cabinet, or an optical fiber.

12. A traffic control method based on a roadside sensing system, comprising:
acquiring (301) roadside sensing information; and
processing (302) the roadside sensing information to obtain sensing result information.

13. The method according to claim 12, wherein the acquiring roadside sensing information, comprises:
acquiring (401) first traffic service information of other traffic participants, intention information of the other traffic participants, second traffic service information of a target vehicle, and traffic environment information;
the processing the roadside sensing information to obtain sensing result information, comprises: inputting (402) the second traffic service information into a pre-trained intention recognition model to obtain intention information of the target vehicle; and generating (403) a first traffic travelling strategy, based on the intention information of the target vehicle, the intention information of the other traffic participants and the traffic environment information, wherein the first traffic travelling strategy is used to control the other traffic participants to continue travelling based on the first traffic service information.

14. The method according to claim 13, wherein the generating a first traffic travelling strategy, based on the intention information of the target vehicle, the intention information of the other traffic participants and the traffic environment information, wherein the first traffic travelling strategy is used to control the other traffic participants to continue travelling based on the first traffic service information, comprises:
determining intention priority information based on the intention information of the target vehicle and the intention information of the other traffic participants; and
generating the first traffic travelling strategy based on the intention priority information and the traffic environment information;
preferably, the generating the first traffic travelling strategy based on the intention priority information and the traffic environment information, comprises:
in response to priority corresponding to the intention information of the other traffic participants being higher than priority corresponding to the intention information of the target vehicle, determining whether the target vehicle is within a first preset area, wherein the first preset area is an area that allows the target vehicle to execute the first traffic travelling strategy; and
in response to the target vehicle being within the first preset area, generating the first traffic travelling strategy based on the intention priority information and the traffic environment information.

15. The method according to claim 14, wherein the method further comprises:
in response to the target vehicle not being within the first preset area, generating a second traffic travelling strategy, wherein the second traffic travelling strategy is used to control the target vehicle to continue travelling based on the second traffic service information.

16. The method according to claim 14, wherein the method further comprises:
in response to the target vehicle not being within the first preset area, determining a third traffic travelling strategy based on the first traffic service information and the second traffic service information, wherein the third traffic travelling strategy is used to control the target vehicle to travel based on the third traffic service information and to control the other traffic participants to travel based on fourth traffic service information.

17. The method according to any one of claims 12-16, wherein the first traffic service information comprises at least one of: basic information of the other traffic participants, power information of the other traffic participants, or accessory information of the other traffic participants.

18. A traffic control system, comprising: an onboard subsystem (602), a traveler subsystem (601), a central subsystem and a roadside subsystem; wherein the central subsystem comprises a cloud control platform (603), and the roadside subsystem comprises a communication facility (605), a traffic safety and management facility (604) and the roadside sensing system (606) according to any one of claims 1-13;
the communication facility(605) is configured to acquire roadside sensing information;
the roadside sensing facility (102, 202) is configured to acquire the roadside sensing information;
the roadside computing facility (103, 203) is configured to store and process the roadside sensing information to obtain sensing result information; and send the roadside sensing information to the cloud control platform (603); and
the cloud control platform (603) is configured to receive the roadside sensing information, and transmit the roadside sensing information to the onboard subsystem (602), the traveler subsystem (601) and the traffic safety and management facility (604).
